# EUROPEAN PATENT SPECIFICATION

(11) **EP 0 422 303 B1**
(45) Date of publication and mention of the grant of the patent: **07.12.1994**
(21) Application number: 89310514.8
(22) Date of filing: 13.10.1989
(51) Int. Cl.: B64C 9/20

(54) **Wing trailing edge flaps for aircraft**
Hinterkantenklappen eines Flugzeuges
Volets de bord de fuite pour avion

(43) Date of publication of application: 17.04.1991
(73) Proprietor: BRITISH AEROSPACE PUBLIC LIMITED COMPANY, Farnborough, Hants. GU14 6YU (GB)
(72) Inventor: Laceby, Maurice Arthur, Filton House Bristol BS99 7AR (GB)

(56) References cited:
- FR-A- 2 076 043
- FR-A- 2 115 468
- GB-A- 775 603
- US-A- 4 049 219

## Description

This invention relates to wing trailing edge flaps for aircraft. More particularly it relates to a flap system which is readily adaptable, in operation, from a single slotted to a double slotted configuration.

Single slotted trailing edge flaps are well known which are configured such that they are movable from a datum cruise position where they conform to, and therefore define, the wing trailing edge aerodynamic profile to selected take-off, approach and landing settings where they are translated rearwardly relative to the wing fixed trailing edge structure with an associated downward angular displacement. Consequently, a convergent slot is formed between the wing trailing edge structure and the exposed leading edge of the flap, the resultant induced flow through the slot enhancing the flow and thus the aerodynamic lift over the wing upper surface particularly in the low speed handling mode.

For a wing associated with a transport aircraft of particular pay load carrying capacity, a single slotted flap may perform adequately. However, it has become common practice to increase payload capacity by an increase in fuselage length, for example, whilst maintaining the wing substantially unchanged. Changes in touchdown attitude and approach speed arising as a consequence of these changes may demand a trailing edge flap system of improved performance which the single slotted type may not be capable of achieving. This shortcoming may beneficially be overcome by a double slotted flap. However, it would be preferable, in achieving this improved performance that the maximum possible commonality between the alternative flap systems should be achieved in terms of overall flap geometry and operating mechanism so that (a) the flap will still be contained within the same aerodynamic profile envelope when in its stowed position (b) will extend, unchanged, as a single slotted device up to and including its take-off setting but whereby the flap is so configured and its associated operating mechanism modified thereby achieving a double slotted configuration in the approach and landing modes. It is the object of the present invention to achieve such an arrangement.

Certain prior art arrangement of double slotted flaps are known. For example:-
British Patent 560,996 teaches the use of a main flap and a secondary flap and where the secondary flap is moveable rearwardly to define a slot. In this arrangement the secondary flap is mounted on runners contained within the main flap.

British Patent 775,603 relates to a main and auxiliary flap system moveable as a unit for the take-off and approach setting but with the auxiliary flap moveable with respect to the main flap in the landing position. In this arrangement the angular deflection of the auxiliary flap is defined in one embodiment by a roller on a single flap arm (11) engaging a stationary guide path 7. Only a single auxiliary flap support is illustrated.

British Patent 1,227,316 teaches a high lift flap where a tab is separated from a main flap to define a slot by means of a push-pull rod at least part of which turns about its longitudinal axis to cause deflection.

US Patent 4,049,219 teaches a double element trailing edge flap according to the preamble of claim 1 with the main flap moveable by a four-bar linkage and the aft flap mounted to the main flap by a two-bar linkage and programmed with a linkage pivotally mounted to wing support structure.

According to the present invention there is provided a double element trailing edge flap assembly (14) for an aircraft wing of the type comprising a primary flap portion (15) and an interconnected auxiliary flap portion (16) configured to be relatively moveable and angularly displaced with respect to the primary portion, in which the flap assembly is extendable rearwardly by actuating means (24, 26, 27) from its stowed position up to and including a take-off setting and a single convergent slot is formed between the flap assembly and the wing trailing edge without relative movement between the respective flap portions and to a landing mode setting where continuing rearward translation of the flap assembly effects by attitude control means (41) angular displacement of the auxiliary flap portion relative to the primary flap portion such that a convergent slot (43) is formed therebetween at a pre-defined gap and overlap between the leading edge portion of the auxiliary flap portion and the trailing edge of the primary flap portion, said angular displacement and said gap and overlap being achieved by a two bar linkage arrangement comprising a first link (34) having a first pivotal attachment (36) at a forward location on the auxiliary flap portion (16) and a second pivotal attachment (32) to said primary flap portion (15) and a second link (35) having a third pivotal attachment (37) at a rearward location on the auxiliary flap portion (16) and a fourth pivotal attachment (33) to the primary flap portion (15), characterised in that the second and fourth pivotal attachments (32, 33) are positioned arbitrarily along lines forming, respectively, the perpendicular bisectors of lines joining on the one hand the stowed and landing mode positions of the first pivotal attachment (36) and on the other hand the stowed and landing mode positions of the third pivotal attachment (37).

One embodiment of the invention will now be described, by way of example only, and with reference to the accompanying drawings, in which:-
Figure 1 schematically illustrates the linkage geometry controlling the auxiliary flap angular displacement.
Figure 2 is a side elevation on the wing flap arrangement of the present invention at one spanwise location.
Figure 3 is a part sectional plan view on the installation viewed along a line III-III in Figure 2.
Figure 4 is a section through the installation at one chordwise station viewed along a line IV-IV in Figure 2.
Figure 5 is a further side elevation on the wing flap installation in deployed configuration.

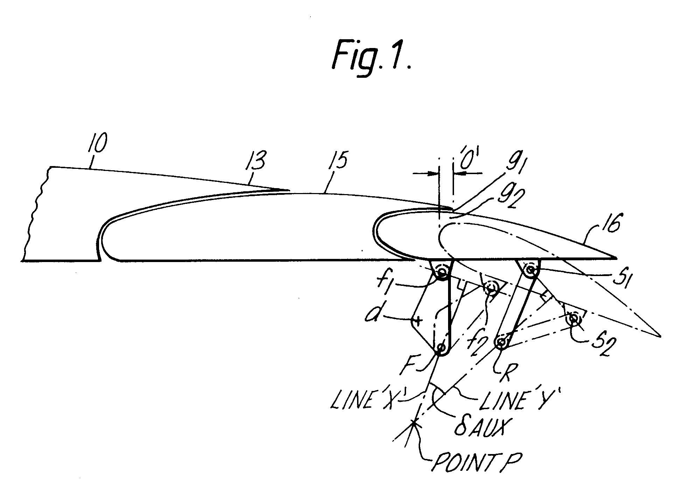

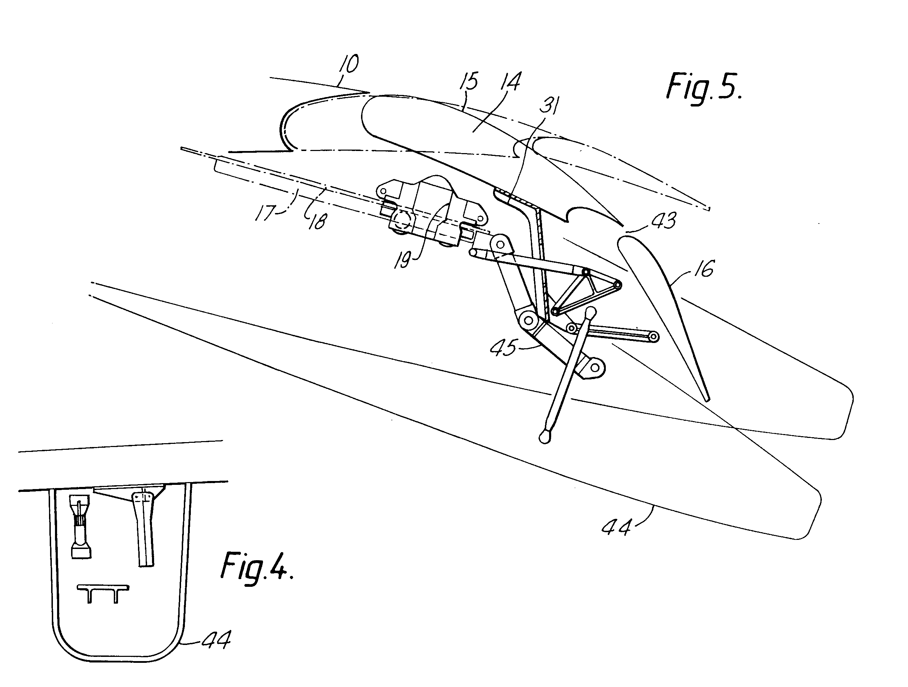

Referring firstly to Figure 1 this illustrates the preferred geometrical arrangement of linkages interconnecting the auxiliary flap portion 16 to the primary flap portion 15. For simplicity, the primary flap portion 15 is shown in stowed position relative to the wing trailing edge 13 of the wing 10. It will be appreciated, however, from the accompanying description of the embodiments, that angular displacement of the auxiliary flap portion 16 can only occur as a function of the displacement of the primary flap portion. Reference to Figure 5 will show the flap system fully deployed in the landing mode.

The linkage geometry for the auxiliary flap is based on the flap in its stowed position relative to the primary flap portion and the angular displacement which it is required to adopt in the landing mode, the extreme range of movement required. In its stowed position when it substantially conforms to the trailing edge configuration of the primary flap 15 only a minimum clearance gap g, will be necessary. However, in the landing mode setting there is an aerodynamic requirement for there to be an overlap 'O' between the auxiliary flap leading edge and the extreme rearward extent of the primary flap trailing edge together with a pre-defined gap 'g₂ʼ in order to achieve a convergent secondary slot. The primary convergent slot is that formed in similar manner between the primary flap leading edge and the wing.

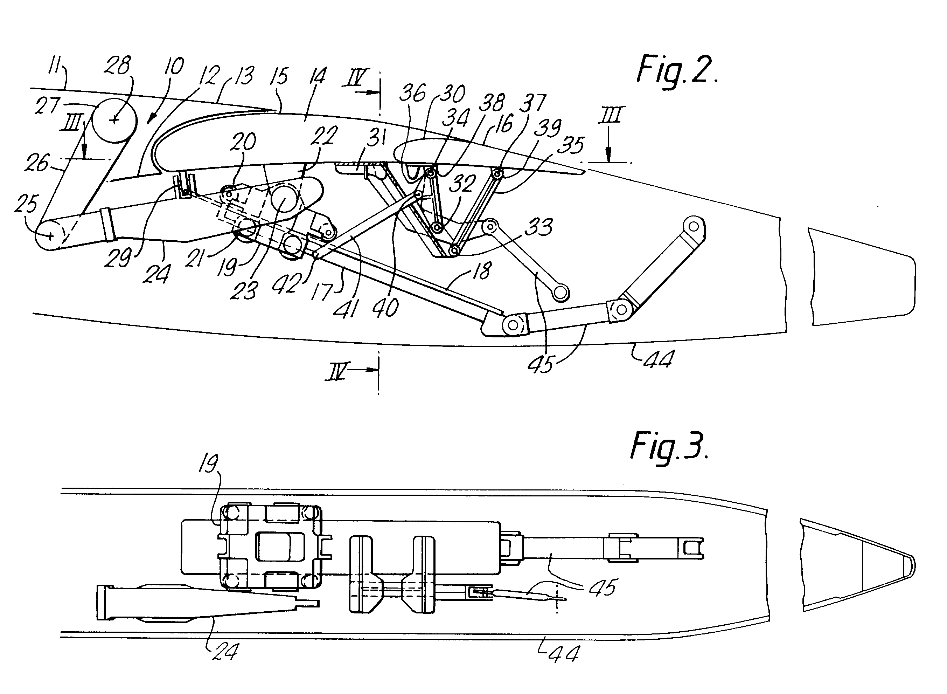

The geometry to achieve the desired operating parameters is established thus. The auxiliary flap 16 is set at the desired landing mode setting, in this embodiment 20° with the required gaps and overlaps. Two arbitrary attachment points f₁ and s₁ are selected which sit at f₂ and s₂ with δ aux = 20°. Earth hinge points F and R are located by mounting beam means off the primary flap, as illustrated in Figures 2 and 3 (with the earth points indicated thereon as 32 and 33) where F can be anywhere on line X and R anywhere on line Y where lines X and Y are the perpendicular bisectors of f₁ f₂, s₁ s₂ respectively. The linkage lengths Ff₁ and Rs₁ are selected on the basis that Ff₁ is the dominant term in setting aux in relation to Sf where Sf is the primary flap setting. Point P as illustrated is correct for cruise, ie, the stowed position, and landing modes only. The point 'd' (indicated as item 40 in Figure 2) is the pivotal attachment point for auxiliary flap drive (via attitude control link 41 in Figure 2) and is located so that it will give the optimum input drive from the flap drive mechanism.

Referring to Figures 2-5 inclusive, there is illustrated an aft portion of an aircraft wing 10 having an upper surface 11, a lower surface 12, a trailing edge portion 13. A flap assembly 14 comprising a forward flap element 15 and a rearward auxiliary flap portion 16 are shown in Figure 2 in stowed datum cruise position within the trailing edge portion 13. Extending rearwardly from the undersurface of the wing 10 is a mounting beam 17 having an upper diagonal rolling surface 18 for engaging a flap support carriage 19. The carriage is in rolling engagement with the mounting beam by means of upper and lower pairs of rollers 20 and 21 respectively. The forward flap element 15 is pivotally supported upon the carriage 19 via a fixed depending bracket 22 including a spanwise pivotal attachment 23 to the carriage 19 representing a common pivot axis for the flap and a flap actuating rod 24. The rod 24 extends forwardly, its forward extremity including a pivotal attachment 25 to a lever arm 26 extending downwardly from a rotary actuator 27, mounted to the fixed wing structure for rotation about a generally spanwise axis 28. Intermediate the pivotal attachments 23 and 25, the actuating rod includes a flap leading edge attachment assembly 29 for flap attitude control. The rear of the forward flap element 14 includes a trailing edge shroud portion 30.

An auxiliary flap support post 31 depends diagonally from the undersurface of the forward flap element 14 and incorporates pivotal attachments 32 and 33 for respectively mounting auxiliary flap support links 34 and 35, the links being respectively pivotally attached at 36 and 37 to attachment brackets 38 and 39 depending from the flap undersurface. The link 34 is triangulated in order to accommodate a pivotal attachment 40 to an attitude control link 41 extending in a forwardly diagonal direction and having a pivotal attachment 42 to the carriage 19.

In the configuration described, the forward flap element and the auxiliary flap combine in the stowed or datum cruise position as illustrated in Figure 2 to effectively form a one element flap assembly which is maintained up to and including the take-off setting at which a single convergent slot is formed between the primary flap portion leading edge and the wing trailing edge portion 13. In continuing movement to the maximum extent of its movement, ie, the landing mode position the flap assembly is mechanically configured to define a double slotted flap assembly.

The flap operation will now be described in detail. In operation, the rotary actuator 27 via the lever arm 26 and the flap actuating rod 24 will translate the flap assembly 14 in a rearwardly direction with an associated downwards deflection. The degree of deflection, as a function of the said rearwards translation is controlled by the progression of the carriage 19 down the rolling surface 18 of the mounting beam 17 driven by the flap actuating rod 24 and whose angular displacement controls the path of the flap leading edge by means of the attachment assembly 29.

Over the range of movement from the stowed cruise configuration to the take-off setting the flap elements will remain in the datum configuration of Figure 2, ie, there will be no relative angular displacement of the element 16 with respect to the element 15. That is because, during that range of movement whilst the flap attitude is controlled by its rotation about its pivotal attachment 23, the auxiliary flap attitude control link 41 will simultaneously rotate about its lower pivotal attachment 42. The geometry is such that the circular arc movement will effect no longitudinal displacement and thus no corresponding angular displacement of the links 34 and 35. It will, however, have adopted an attitude more generally in alignment with the line of movement of the carriage 19 and continuing rearward movement of this carriage beyond the take-off setting will initiate an associated linear displacement of the control link 41, angular displacement of the links 34 and 35 and controlled rotation of the auxiliary flap 16 with respect to the forward flap element 15 such that on selection of the approach and landing setting an optimised convergent slot 43 will be established as shown in Figure 5.

Although not described in detail here, the operating mechanism is contained within an underwing fairing 44 and includes linkage arrangements 45 interconnected to the flap operating mechanism so that at least the rearward portion is angularly deployed in conjunction with flap movement.

## Claims

1. A double element trailing edge flap assembly (14) for an aircraft wing of the type comprising a primary flap portion (15) and an interconnected auxiliary flap portion (16) configured to be relatively moveable and angularly displaced with respect to the primary portion, in which the flap assembly is extendable rearwardly by actuating means (24, 26, 27) from its stowed position up to and including a take-off setting and a single convergent slot is formed between the flap assembly and the wing trailing edge without relative movement between the respective flap portions and to a landing mode setting where continuing rearward translation of the flap assembly effects by attitude control means (41) angular displacement of the auxiliary flap portion relative to the primary flap portion such that a convergent slot (43) is formed therebetween at a pre-defined gap and overlap between the leading edge portion of the auxiliary flap portion and the trailing edge of the primary flap portion, said angular displacement and said gap and overlap being achieved by a two bar linkage arrangement comprising a first link (34) having a first pivotal attachment (36) at a forward location on the auxiliary flap portion (16) and a second pivotal attachment (32) to said primary flap portion (15) and a second link (35) having a third pivotal attachment (37) at a rearward location on the auxiliary flap portion (16) and a fourth pivotal attachment (33) to the primary flap portion (15), characterised in that the second and fourth pivotal attachments (32, 33) are positioned arbitrarily along lines forming, respectively, the perpendicular bisectors of lines joining on the one hand the stowed and landing mode positions of the first pivotal attachment (36) and on the other hand the stowed and landing mode positions of the third pivotal attachment (37).

2. A double element trailing edge flap assembly according to Claim 1 in which the primary flap portion includes a downwardly diagonal post (31) incorporating the second and fourth pivotal attachments (32, 33) for the first and second links (34, 35),

3. A double element trailing edge flap assembly according to Claim 1 in which the first link (34) includes a fifth pivotal attachment (40) for pivotally engaging the attitude control means (41),

4. A double element trailing edge flap assembly according to Claim 3 in which the attitude control means (41) comprises a push rod interconnecting said first link means (34) and flap assembly support means (19), said flap assembly support means comprising a carriage in rolling engagement with a mounting beam (17) extending rearwardly from said aircraft wing and being connected to flap assembly actuating means (24, 26, 27).

## Patentansprüche

1. Als Doppelklappe ausgebildete, hintere Flügelklappe (14) für einen Tragflügel eines Flugzeugs, bestehend aus einer Primärklappe (15) und einer damit verbundenen Hilfsklappe (16), die gegenüber der Primärklappe relativ beweglich und im Winkel anstellbar ist, wobei der Klappenaufbau durch eine Betätigungseinrichtung (24, 26, 27) von der Staustellung nach hinten bis in eine Startstellung verschiebbar ist, und ein einziger, konvergenter Schlitz zwischen dem Klappenaufbau und dem Hinterrand des Tragflügels gebildet wird, ohne daß eine Relativbewegung zwischen den jeweiligen Klappen erfolgt, während bei einer fortgesetzten Rückwärtsbewegung in die Landestellung durch Lagesteuermittel (41) eine Winkelversetzung der Hilfsklappe relativ zu der Primärklappe derart zustandekommt, daß ein konvergenter Schlitz (43) mit einer vorbestimmten Spaltbreite und Überlappung zwischen dem Vorderkantenabschnitt der Hilfsklappe und der Hinterkante der Primärklappe zustandekommt, wobei die Winkelversetzung und der Spalt und die Überlappung durch einen Zweilenker-Gelenkmechanismus geschaffen werden, der einen ersten Lenker (34) mit einem ersten Anlenkpunkt (36) an einer vorderen Stelle der Hilfsklappe (16) und einen zweiten Anlenkpunkt (32) mit der Primärklappe (15) besitzt und einen zweiten Lenker (35) aufweist, der einen dritten Anlenkpunkt (37) an einer hinteren Stelle der Hilfsklappe (16) und einen vierten Anlenkpunkt (33) an der Primärklappe (15) aufweist,
dadurch gekennzeichnet, daß der zweite und vierte Anlenkpunkt (32, 33) willkürlich auf Linien angeordnet sind, die jeweils die Mittelsenkrechten von Linien bilden, die einerseits die Verstau- und Landepositionen des ersten Schwenkpunktes (36) verbinden und andererseits die Verstau- und Landepositionen des dritten Schwenkpunktes (37) verbinden.

2. Als Doppelklappe ausgebildete, hintere Flügelklappe nach Anspruch 1, bei welcher die Primärklappe einen nach unten weisenden, diagonalen Träger (31) aufweist, der den zweiten und vierten Anlenkpunkt (32, 33) für den ersten bzw. zweiten Lenker (34 bzw. 35) bildet.

3. Als Doppelklappe ausgebildete, hintere Flügelklappe nach Anspruch 1, bei welcher der erste Lenker (34) einen fünften Anlenkpunkt (40) aufweist, um schwenkbar an der Lagesteuervorrichtung (41) anzugreifen.

4. Als Doppelklappe ausgebildete, hintere Flügelklappe nach Anspruch 3, bei welcher die Lagesteuervorrichtung (41) eine Druckstange aufweist, die den ersten Lenker (34) und den Klappenträger (19) verbindet, und daß der Klappenträger einen Schlitten aufweist, der in Rolleingriff mit einem Träger (17) steht, welcher vom Flugzeugtragflügel nach hinten vorsteht und mit dem Klappenantrieb (24, 26, 27) in Verbindung steht.

## Revendications

1. Ensemble (14) formant volet de bord de fuite à élément double pour aile d'avion du type comportant une partie (15) formant volet principal et une partie (16) formant volet auxiliaire reliées entre elles, adaptée pour être relativement mobile et pour pouvoir être déplacée de manière angulaire par rapport à la partie principale, dans lequel l'ensemble formant volet peut être étendu vers l'arrière par l'intermédiaire de moyens d'actionnement (24, 26, 27) à partir de sa position rentrée jusqu'à y compris une position de décollage, de sorte qu'une fente convergente unique soit formée entre l'ensemble formant volet et le bord de fuite de l'aile sans déplacement relatif entre les parties respectives de volet, et vers une position de mode d'atterrissage dans laquelle la translation de l'ensemble formant volet se poursuivant vers l'arrière effectue, par l'intermédiaire de moyens (41) de commande d'attitude, un déplacement angulaire de la partie formant volet auxiliaire par rapport à la partie formant volet principal, de telle sorte qu'une fente convergente (43) soit formée entre celles-ci au niveau d'un espace et d'un recouvrement pré-définis situés entre la partie formant bord d'attaque de la partie formant volet auxiliaire et le bord de fuite de la partie formant volet principal, ledit déplacement angulaire et lesdits espace et recouvrement étant obtenus par l'agencement d'une liaison à deux barres comportant une première barre de liaison (34) ayant une première fixation pivotante (36) positionnée au niveau d'un emplacement situé vers l'avant sur la partie (16) formant volet auxiliaire et une deuxième fixation pivotante (32) positionnée sur ladite partie (15) formant volet principal, et une seconde barre de liaison (35) ayant une troisième fixation pivotante (37) positionnée au niveau d'un emplacement situé vers l'arrière sur la partie (16) formant volet auxiliaire et une quatrième fixation pivotante (33) située sur la partie (15) formant volet principal, caractérisé en ce que les deuxième et quatrième fixations pivotantes (32, 33) sont positionnées arbitrairement le long de lignes formant, respectivement, les médiatrices perpendiculaires aux lignes joignant d'une part les positions en mode rentré et d'atterrissage de la première fixation pivotante (36) et d'autre part les positions en mode rentré et d'atterrissage de la troisième fixation pivotante (37).

2. Ensemble formant volet de bord de fuite à élément double selon la revendication 1, dans lequel la partie formant volet principal comporte un montant (31) dirigé en oblique vers le bas, incorporant les deuxième et quatrième fixations pivotantes (32, 33) des première et seconde barres de liaison (34, 35),

3. Ensemble formant volet de bord de fuite à élément double selon la revendication 1, dans lequel la première barre de liaison (34) comporte une cinquième fixation pivotante (40) pour mettre en prise de manière pivotante les moyens de commande d'attitude (41),

4. Ensemble formant volet de bord de fuite à élément double selon la revendication 3, dans lequel les moyens de commande d'attitude (41) comportent une tige de poussée reliée auxdits premiers moyens formant barre de liaison (34) et à des moyens de support (19) de l'ensemble formant volet, lesdits moyens de support de l'ensemble formant volet comportent un chariot en contact roulant avec une poutre d'assemblage (17) s'étendant vers l'arrière à partir de ladite aile d'avion et étant relié à des moyens d'actionnement (24, 26, 27) de l'ensemble formant volet.
